# EUROPEAN PATENT APPLICATION

(11) **EP 4 817 869 A1**
(43) Date of publication of application: **07.10.2026**
(21) Application number: 25167547.6
(22) Date of filing: 31.03.2025
(51) Int. Cl.: B32B 11/04, E04D 11/00, E04D 13/00

(54) **BITUMEN-BASED ROOT BARRIER MEMBRANE**

(71) Applicant: Sika Technology AG, 6340 Baar (CH)
(72) Inventor: AGANETTI, Gianpaolo, 37060 Castel d'Azzano (IT); PECHER, Johannes, 37060 Castel D'Azzano (IT)
(74) Representative: Sika Patent Attorneys

(57) **Abstract**

A root barrier membrane comprises:
a) an upper layer (1) based on a first bitumen composition comprising, based on the total weight of the first bitumen composition:
- at least 35 wt.%, especially at least 50 wt.%, of bitumen and
- at least 5 wt.% of an amorphous polyolefin (APO);

b) a lower layer (2), based on a second bitumen composition comprising, based on the total weight of the second bitumen composition:
- at least 35 wt.%, especially at least 50 wt.%, of bitumen,
- at least 1 wt.% of at least one styrene block copolymer,
- a root inhibition agent;

whereby the first composition of the upper layer (1) is different from the second composition of the lower layer (2)

## Description

### Technical field

The invention relates to a bitumen-based root barrier membrane with at least two different layers and comprising a root inhibition agent. Also, the invention is related to a construction, especially a building roof, a building facade, a base slab, an inner and/or outer area of a tunnel, a canopy, a bridge and/or a swimming pool, comprising a surface covered with a root barrier membrane. Further aspects of the invention are directed to a method of sealing a construction surface with a root barrier membrane and the use of a root barrier membrane for sealing a construction surface, in particular a surface of a construction to be planted with greenery.

### Background art

In the field of construction, polymeric and bituminous membranes are used to protect underground and above ground constructions, such as base slabs, walls, floors, basements, tunnels, wet rooms, building facades, flat and low-sloped roofs, landfills, water-retaining structures, ponds, and dikes against penetration of water, moisture, and harmful gases. Waterproofing membranes are applied, for example, to prevent ingress of water through cracks that develop in the concrete structure due to building settlement, load deflection or concrete shrinkage.

Roofing membranes are used for sealing of flat and low-sloped roof structures against penetration of water and to move water off the roof. The membranes can be adhered to a surface of the substrate, for example, by using adhesives or mechanical fastening means, such as screws with plates. Bitumen membranes are provided as "torch-on" (torch-applied) and self-adhering versions. Torch-on bitumen membranes are rolled out onto the substrate or the construction surface to be sealed, respectively, and a construction worker uses a hand-held propane torch to heat the material and adhere it to the surface of the substrate.

In the case of green building areas, it is crucial to ensure they are protected from plant roots. Despite the seal, plant roots can eventually penetrate and damage it, compromising the seal and potentially causing structural damage.

In this regard DE 199 15 957 A1 (Roland-Werke Dachbaustoffe u. Bauchemie GmbH & Co KG) describes a roof covering material for green roofs in the form of reinforced bitumen or plastic roofing membranes that contains copper powder incorporated into the plastic or bitumen in order to reduce the root growth of plants. However, the incorporated copper powder is washed out over time and thus gets into the environment, and thus, among other things, in water and soil. Since copper is not biodegradable, this is a problematic.

EP 3 243 975 B1 (swisspor Management AG) describes another approach with a reduced risk of washout and leaching of root protection additives. Specifically, a bitumen sheet with root protection for sealing building surfaces comprises an upper bitumen layer, a lower bitumen layer and at least one reinforcing layer, wherein the lower bitumen layer and/or the reinforcing layer contains an organic root protection additive and the upper bitumen layer contains substantially no root protection additive. Thereby, the lower bitumen layer as well as the upper bitumen layer and the reinforcement layer along at least one edge of the bitumen sheet comprises a lateral edge layer, which does not contain any root protection additive and thus forms a first edge of the bitumen sheet. The bitumen layers may comprise of plastics, such as e.g. styrene-butadiene-styrene and/or atactic polypropylene. However, this approach in particular is not entirely satisfactory with respect to migration and leaching of the root protection additives.

Various roof covering materials for green roofs are available on the market. However, the leaching of environmentally harmful substances is usually a problem.

There is therefore still a need for improved solutions that do not have the disadvantages mentioned above, or have them to a lesser extent.

### Summary of the invention

The object of the invention is to provide an improved root barrier membrane. The membrane in particular should be suitable for sealing construction surfaces, especially surfaces of a construction to be planted with greenery. Furthermore, the membrane preferably should be less prone to leaching of environmentally harmful substances and at the same time be as easy as possible to manufacture and install and provide a reliable sealing.

Surprisingly, it was found that these objects can be achieved with the root barrier membrane according to independent claim 1.

Particularly, it was surprisingly found that a membrane with a structure having an upper layer comprising a bitumen composition with bitumen and amorphous polyolefin (APO) in combination with a lower layer comprising a bitumen composition with bitumen, a styrene block copolymer and a root inhibition agent with the given proportions allows for obtaining membranes with a very low leaching of environmentally harmful substances and a permanent resistance against penetration or perforation by plant roots and plant rhizomes.

Without wishing to be bound by theory, it is believed that the inclusion of the root inhibition agent in a composition of bitumen and styrene block copolymers in the lower layer significantly reduces migration of the root inhibition additive and the composition of bitumen and amorphous polyolefin in the upper layer forms an effective barrier that further reduces leaching of the root inhibition additive. Tests have shown that in order to avoid leaching of environmentally harmful substances the specific structure of the root barrier membrane seems to be essential. It is therefore believed that the components in the compositions of the two layers functionally interact with each other resulting in surprisingly beneficial properties of the membrane.

Also, membranes according to the invention can be provided that show a permanent resistance against penetration or perforation by plant roots when tested according to the "Procedure for investigating the root penetration resistance of membranes and coatings for green roofs" (Forschungsgesellschaft Landschaftsentwicklung Landschaftsbau e.V. (FLL); Friedensplatz 4, D-53111 Bonn, Green Roof Guidelines 2018, Appendix C, 2018). The FLL method involves all relevant elements of the method according to the European Standard EN 13948:2008-01. Furthermore, the FLL method is more extensive and is considered to be more significant among experts. From a technical point of view, the membranes according to the invention can be regarded as being resistant to root penetrations according to EN 13948:2008-01 as well.

Regarding leaching, dynamic surface leaching tests according to DIN CEN/TS 16637-2:2014-11 have been performed with membranes according to the invention. Thereby, both, with respect to herbicides as well as organic and inorganic parameters, no substances could be detected above the detection limit. This shows, that the membranes according to the invention are highly beneficial with respect to leaching of environmentally harmful substances.

Additionally, the membranes according to the invention can be manufactured in a straightforward manner since they are mainly based on substances known per se with membranes, which, however, need to be combined in a new and targeted manner. Likewise, installation of the root barrier membrane according to the invention can be done by usual techniques such as torching. Therefore, no special equipment or knowledge is required.

Further aspects and preferred embodiments of the present invention are described in the further independent and dependent claims and/or set forth in the following description.

### Detailed description of the invention

A first aspect of the present invention is related to a root barrier membrane comprising:
a) an upper layer, based on or consisting of a first bitumen composition comprising, based on the total weight of the first bitumen composition:
   - at least 35 wt.%, especially at least 50 wt.%, of bitumen and
   - at least 5 wt.% of an amorphous polyolefin (APO);
b) a lower layer, based on or consisting of a second bitumen composition comprising, based on the total weight of the second bitumen composition:
   - at least 35 wt.%, especially at least 50 wt.%, of bitumen,
   - at least 1 wt.% of at least one styrene block copolymer,
   - a root inhibition agent;
whereby the first composition of the upper layer is different from the second composition of the lower layer.

Especially, the lower layer and the upper layer are in direct contact with each other. Put differently, in this case, no additional layer is present at an interface between the lower and the upper layer. However, in particular, there is an interface between the lower layer and the upper layer.

According to another embodiment, the lower layer and the upper layer are indirectly bonded together, e.g. by an additional layer of an adhesive.

In particular, the upper layer and the lower layer are at least in parts materially bonded together on opposing surfaces, in particular over the entire opposing surfaces. Bonding can e.g. be realized by self-adhesion, adhesively bonding with an additional adhesive and/or by welding.

Especially the lower layer and the upper layer with respect to their opposing surfaces are congruent and/or with respect to their lateral extension are essentially identical in size. In particular, the lower layer and the upper layer lie congruently on one another.

Preferably, a thickness of the lower layer is higher than 50%, especially 55 to 98 %, in particular 65 to 90%, of the total thickness of the root barrier membrane and/or a thickness of the upper layer is smaller than 50%, especially 2 to 45%, in particular 10 to 35%, of the total thickness of the root barrier membrane.

A total thickness of the root barrier membrane preferably is 1 to 15 mm, especially 2 - 10 mm. in particular 3 - 8 mm.

In particular, a thickness of the upper layer is smaller than 2 mm, especially smaller than 1.5 mm, in particular smaller than 1.0 mm and/or a thickness of the lower layer is larger than 2 mm, especially larger than 3 mm, in particular larger than 4 mm.

Thus, preferably, the lower layer with the root inhibition agent and the styrene block copolymer forms the major part of the membrane.

The above mentioned thicknesses and thickness ratios turned out to be highly beneficial and the advantages of the invention are particularly apparent.

Both the lower layer and the upper layer of the root barrier membrane according to the invention comprise bitumen.

The term "bitumen" designates in the present disclosure blends of heavy hydrocarbons, having a solid consistency at room temperature, which are normally obtained as vacuum residue from refinery processes, which can be distillation (topping or vacuum) and conversion (thermal cracking and visbreaking) processes of suitable crude oils. Furthermore, the term "bitumen" also designates natural and synthetic bitumen as well as bituminous materials obtained from the extraction of tars and bituminous sands.

The bitumen can comprise one of more different types of bitumen materials, such as penetration grade (distillation) bitumen, air-rectified (semi-blown) bitumen, and hard grade bitumen.

The term "penetration grade bitumen" refers here to bitumen obtained from fractional distillation of crude oil. A heavy fraction composed of high molecular weight hydrocarbons, also known as long residue, which is obtained after removal of gasoline, kerosene, and gas oil fractions, is first distilled in a vacuum distillation column to produce more gas oil, distillates, and a short residue. The short residue is then used as a feed stock for producing different grades of bitumen classified by their penetration index, typically defined by a PEN value, which is the distance in tenth millimeters (dmm) that a needle penetrates the bitumen under a standard test method. Penetration grade bitumen are characterized by penetration and softening point.

According to one or more embodiments, the bitumen used in the upper layer and the lower layer comprises at least 75 wt.-%, preferably at least 85 wt.-%, more preferably at least 90 wt.-% of at least one penetration grade bitumen, preferably having a penetration value in the range of 30 - 300 dmm, more preferably 70 - 220 dmm, even more preferably 100 - 160 dmm and/or a softening point determined by Ring and Ball measurement conducted according to EN 1427:2015-09 standard in the range of 30 - 100 °C, more preferably 30 - 70 °C, even more preferably 30 - 50 °C.

Especially, the first bitumen composition of the upper layer, based on the total weight of the first bitumen composition, comprises at least 55 wt.%, especially at least 60 wt.%, in particular at least 65 wt.% or at least 70 wt.%, of bitumen. In particular, the first bitumen composition of the upper layer, based on the total weight of the first bitumen composition, comprises 55 to 95 wt.%, especially 60 to 85 wt.%, in particular 65 to 75 wt.%, of bitumen.

The second bitumen composition in the lower layer, based on the total weight of the second bitumen composition, preferably comprises at least 55 wt.%, especially at least 65 wt.%, in particular at least 75 wt.%, of bitumen. In particular, the second bitumen composition in the lower layer, based on the total weight of the second bitumen composition, preferably comprises 55 to 95 wt.%, especially 65 to 90 wt.%, in particular 75 to 85 wt.%, of bitumen.

The upper layer of the root barrier membrane according to the invention comprises an amorphous polyolefin.

The term "amorphous polyolefin (APO)" refers in the present disclosure to polyolefins having a low crystallinity degree determined by a differential scanning calorimetry (DSC) measurements, such as in the range of 0.001 - 10 wt.-%, preferably 0.001 - 5 wt.-%. The crystallinity degree of a polymer can be determined by using the differential scanning calorimetry measurements conducted according to ISO 11357 standard to determine the heat of fusion, from which the degree of crystallinity is calculated. In particular, the term "amorphous polyolefin" designates poly-α-olefins lacking a crystalline melting point (Tm) as determined by differential scanning calorimetric (DSC) or equivalent technique.

Suitable amorphous polyolefins include, for example, amorphous propene rich copolymers of propylene and ethylene, amorphous propene rich copolymers of propylene and butene, amorphous propene rich copolymers of propylene and hexene, and amorphous propene rich terpolymers of propylene, ethylene, and butene. The term "propene rich" is understood to mean copolymers and terpolymers having a content of propene derived units of at least 50 wt.-%, preferably at least 65 wt.-%, more preferably at least 70 wt.-%, based on total weight of the copolymer/terpolymer

Especially preferred, the amorphous polyolefin comprises or consists of atactic polypropylene (APP), atactic poly(ethylene-co-propylene) (aE/P), atactic poly(1-butene) (aPB), and/or atactic poly(propylene-co-butene) (aPPB). Most preferred are atactic polypropylene (APP) and/or atactic poly(ethylene-co-propylene) (aE/P), in particular atactic polypropylene (APP).

Such kind of atactic polmyers have a random alkyl group placement along the polymer chain, preventing them from forming a well-ordered crystalline structure. As a result, they are soft, tacky, and rubbery rather than rigid.

Based on the total weight of the first bitumen composition, a proportion of the amorphous polyolefin in the first bitumen composition, especially atactic polypropylene (APP), preferably is from 8 to 40 wt.%, especially 10 to 30 wt.%, in particular 15 to 25 wt.% or 17 to 23 wt.%. According to a highly preferred embodiment, a proportion of amorphous polyolefin in the first bitumen composition is below 30 wt.%, especially below 25 wt.%.

In particular, based on the total weight of the second bitumen composition, a proportion of amorphous polyolefin, especially a proportion of atactic polypropylene (APP), in the second bitumen composition is smaller than 1 wt.%, especially smaller than 0.5 wt.%, in particular smaller than 0.1 wt.% or 0 wt%. Thus, in this case, the second bitumen composition and/or the lower layer is essentially free of amorphous polyolefin.

According to a highly preferred embodiment, the upper layer features a penetration value (PEN) in the range of 30 - 300 dmm, more preferably 50 - 220 dmm, even more preferably 80 - 120 dmm. In particular, the penetration value is measured according to EN 1426:2015-09 at a temperature of 60°C.

This may be achieved by a targeted choice of suitable bitumen and amorphous polyolefin, e.g. as described above.

With the above-mentioned compositions of the upper layer, the advantages of the invention are particularly apparent.

The lower layer of the root barrier membrane according to the invention comprises a styrene block copolymer.

Suitable styrene block copolymers for example include styrene block copolymers of the SXS type, in each of which S denotes a non-elastomer styrene (or polystyrene) block and X denotes an elastomeric α-olefin block, which may be polybutadiene, polyisoprene, polyisoprene-polybutadiene, completely or partially hydrogenated polyisoprene (poly ethylene-propylene), or completely or partially hydrogenated polybutadiene (poly ethylene-butylene). The elastomeric α-olefin block preferably has a glass transition temperature in the range from -55 °C to -35 °C. The elastomeric α-olefin block may also be a chemically modified α-olefin block. Particularly suitable chemically modified α-olefin blocks include, for example, maleic acid-grafted α-olefin blocks and particularly maleic acid-grafted ethylene-butylene blocks.

Most preferred styrene block copolymers include styrene-butadiene-styrene (SBS), styrene-isoprene-styrene (SIS), styrene-isoprene-butadiene-styrene (SIBS), styrene-ethylene-butadiene-styrene (SEBS), and styrene-ethylene-propene-styrene (SEPS) block copolymers, preferably having a linear, radial, diblock, triblock or a star structure.

According to a highly preferred embodiment, the styrene block copolymer in the lower layer is selected from styrene-butadiene-styrene (SBS).

Preferably, based on the total weight of the second bitumen composition, a proportion of the styrene block copolymer, especially styrene-butadiene-styrene (SBS), in the second bitumen composition is from 2 to 20 wt.%, especially 3 to 15 wt.%, in particular 4 to 12 wt.% or 5 - 8 wt.%.

In particular, based on the total weight of the first bitumen composition, a proportion of styrene block copolymer, in particular a proportion of styrene-butadiene-styrene (SBS), in the first bitumen composition is smaller than 1 wt.%, especially smaller than 0.5 wt.%, in particular smaller than 0.1 wt.% or 0 wt%. In this case, the first bitumen composition and/or the upper layer is essentially free of styrene block copolymer, in particular styrene-butadiene-styrene (SBS).

With the above-mentioned compositions of the lower layer, the advantages of the invention are particularly apparent.

The lower layer of the root barrier membrane according to the invention furthermore comprises a root inhibition agent.

A "root inhibition agent" in general is a substance that prevents or restricts the growth and/or penetration of plant roots into a specific area or material. In the context of bitumen-based membranes, a root inhibition agent is a chemical and/or natural additive incorporated into the membrane to deter root growth and/or prevent damage to the waterproofing layer while allowing normal plant growth in surrounding areas. These agents work by interfering with root cell division, altering plant hormone activity, and/or creating a physical and/or chemical barrier that discourages root intrusion.

Especially, the root inhibition agent is a herbicide, a fungicide and / or a root repellent.

The root inhibition agent may for example be selected from the group consisting of metal compounds, e.g. copper-based compounds and/or zinc-based compounds; triazole derivatives; S-triazine herbicides; phenoxy herbicides; quaternary ammonium compounds; alkaloids and/or essential oils; or mixtures thereof.

For example, the root inhibition agent is selected from the group consisting of copper compounds, e.g. copper hydroxide, copper naphthenate, and/or copper oxide; triazole-based herbicides, e.g. imazalil, bitertanol, and/or triadimefon; terbuthylazine; mecoprop (MCPP) and derivatives, e.g. 2-(4-chloro-2-methylphenoxy)-propionic acid C₁ - to C₁₈ alkyl esters such as for example 2-(4-chloro-2-methylphenoxy)-propionic acid octyl ester; zinc oxide; essential oil extracts, e.g. eugenol, citronella, and/or neem oil; or mixtures thereof

In a more preferred embodiment, the root inhibition agent is an organic root inhibition agent.

Examples of suitable organic root inhibition agent sinclude Preventol^{®} B2, Preventol^{®} B5, Preventol^{®} RC, Herbitect^{®} HE, Herperit^{®}, Sulcotrione, Mesotrione, Atrizin^{®}, Terbuthylazine, Isoproturon, Glyphosate, Methylchlorophenoxypropionic acid, also called Mecoprop (MCPP), C₁ to C₁₈ esters of mecoprop such as 2-ethylhexyl ester mecoprop or glycol ester mecoprop, MCPA or 2-methyl-4-chlorophenoxyacetic acid, 4-chloro-2-methylphenol (4-CMP), 2,4-dichlorophenoxyacetic acid, also 2,4-D, dicamba or 3,6-dichloro-2-methoxybenzoic acid, dichlorprop, diazinon, diuron, carbendazim, terbutryn, irganol, IPBC, isothiazoninone, TectoGreen MP, TectoGreen M, TectoGreen MP-E, TectoGreen P, TectoGreen P-5, isothiazolinone compounds, tebuconazole, organotin compounds and / or lead chromate. Preference is given in particular to C₁ - to C₁₈ esters of mecoprop, for example 2-ethylhexyl ester mecoprop and / or glycol ester mecoprop

Especially, the root inhibition agent is selected from mecoprop (also known as methylchlorophenoxypropionic acid and MCPP) or C₁ - to C₁₈ esters and/or salts thereof, e.g. 2-(4-chloro-2-methylphenoxy)-propionic acid alkyl esters such as for example 2-(4-chloro-2-methylphenoxy)-propionic acid octyl ester.

In particular, the root inhibition agent is selected from the group consisting of mecoprop-dimethylammonium (CAS no. 32351-70-5), mecoprop-diolamine (CAS no. 1432-14-0), mecoprop-ethylhexyl (CAS no. 71526-69-7), mecoprop-ethyl (CAS no. 40390-11-2), mecoprop-isoctyl (CAS no. 28473-03-2), mecoprop-methyl (CAS no. 2786-19-8), mecoprop-potassium (CAS no. 1929-86-8), mecoprop-sodium (CAS no. 19095-88-6), and/or mecoprop-trolamine (CAS no. 53404-61-8).

Preferably, based on the total weight of the second first bitumen composition, a proportion of the root inhibition agent in the second first bitumen composition is from 0.01 to 1 wt.%, especially 0.1 to 0.6 wt.%, in particular 0.2 to 0.4 wt.%.

The root inhibition agent in particular is homogeneously distributed in the second first bitumen composition, especially over the entire volume of the second bitumen composition. With respect to a lateral extension, especially a length and/or width, of the lower layer, the root inhibition agent in particular is homogeneously distributed.

With the above-mentioned embodiments regarding the root inhibition agent, the advantages of the invention are particularly apparent.

According to a further preferred embodiment, the first bitumen composition and/or the second bitumen composition may comprise one or more inorganic filler(s).

The one or more inorganic filler(s) is/are preferably present in the bitumen composition(s) as a discontinuous particle based phase, which is dispersed in a continuous phase of the bitumen.

Suitable compounds to be used as the inorganic filler include, for example, sand, granite, calcium carbonate, clay, expanded clay, diatomaceous earth, pumice, mica, kaolin, talc, dolomite, xonotlite, perlite, vermiculite, Wollastonite, barite, magnesium carbonate, calcium hydroxide, calcium aluminates, silica, fumed silica, fused silica, aerogels, glass beads, hollow glass spheres, ceramic spheres, bauxite, comminuted concrete, and zeolites.

The term "sand" refers in the present disclosure to mineral clastic sediments (clastic rocks) which are loose conglomerates (loose sediments) of round or angular small grains, which were detached from the original grain structure during the mechanical and chemical degradation and transported to their deposition point, said sediments having an SiO2 content of greater than 50 wt.-%, in particular greater than 75 wt.-%, particularly preferably greater than 85 wt.-%. The term "calcium carbonate" as inorganic filler refers in the present document to calcitic fillers produced from chalk, limestone, or marble by grinding and/or precipitation.

According to one or more embodiments, the at least one inorganic filler is selected from the group consisting of calcium carbonate, clay, expanded clay, diatomaceous earth, pumice, mica, kaolin, talc, dolomite, xonotlite, perlite, vermiculite, Wollastonite, barite, magnesium carbonate, calcium hydroxide, calcium aluminates, silica, fumed silica, and/or fused silica.

According to a highly preferred embodiment, the inorganic filler comprises or consist of calcium carbonate.

Preferably, the at least one inorganic filler has a median particle size d₅₀ of not more than 150 µm, more preferably not more than 100 µm. According to one or more embodiments, the at least one inorganic filler has a median particle size d₅₀ of 0.1 - 100 µm, preferably 0.15 - 50 µm, more preferably 0.15 - 25 µm, even more preferably 0.25 - 15 µm.

The term "particle size" refers in the present disclosure to the area-equivalent spherical diameter of a particle (Xₐᵣₑₐ). The term "median particle size d₅₀"refers to a particle size below which 50 % of all particles by volume are smaller than the d₅₀ value. In analogy, the term d₉₀ particle size refers in the present disclosure to a particle size below which 90 % of all particles by volume are smaller than the d₉₀ value and term "d₁₀ particle size" refers to a particle size below which 10 % of all particles by volume are smaller than the d₁₀ value. A particle size distribution can be measured by laser diffraction according to the method as described in standard ISO 13320:2009 using a wet or dry dispersion method and for example, a Mastersizer 2000 device (trademark of Malvern Instruments Ltd, GB).

Especially, the first bitumen composition, based on the total weight of the first bitumen composition, comprises >0 - 30 wt.%, preferably 3 - 25 wt.-%, more preferably 5 - 10 wt.-%, of the at least one inorganic filler and/or the second bitumen composition, based on the total weight of the second bitumen composition, comprises >0 - 30 wt.%, preferably 5 - 25 wt.-%, more preferably 8 - 15 wt.-%, of the at least one inorganic filler.

Especially, both the first and the second bitumen composition comprise the at least one inorganic filler, in particular the same filler, especially calcium carbonate.

Especially, the first bitumen composition and the second bitumen composition, based on the total weight of the respective layer, comprise less than 25 wt.%, in particular less than 20 wt.%, of the inorganic filler.

According to a further preferred embodiment, the root barrier membrane comprises at least one, in particular exactly one, reinforcement inlay. Thereby, the inlay preferably is embedded in the root barrier membrane.

According to a further preferred embodiment, the upper and/or the lower layer, especially the lower layer, in addition to the first and/or the second bitumen composition comprise(s) the at least one, in particular the exactly one, reinforcement inlay. Thereby, the inlay preferably is embedded in the respective layer. Put differently, in this case no reinforcement inlay is present at an interface between the lower and the upper layer.

Especially the reinforcement inlay is selected form a non-woven, woven, laid scrim, fiber mat and/or a metal film.

The term "non-woven" refers in the present disclosure to materials composed of fibers, which are bonded together by using chemical, mechanical, or thermal bonding means, and which are neither woven nor knitted. Non-woven can be produced, for example, by using a carding or needle punching process, in which the fibers are mechanically entangled to obtain the nonwoven. In chemical bonding, chemical binders such as adhesive materials are used to hold the fibers together in a non-woven. Typical materials for the non-woven include synthetic organic and inorganic fibers.

The term "laid scrim" refers in the present disclosure web-like non-woven products composed of at least two sets of parallel yarns (also designated as weft and warp yarns), which lay on top of each other and are chemically bonded to each other. The yarns of a non-woven scrim are typically arranged with an angle of 60 - 120°, such as 90 ± 5°, towards each other thereby forming interstices, wherein the interstices occupy more than 60% of the entire surface area of the laid scrim.

Suitable synthetic organic fibers for use in the reinforcing inlay include, for example, polyethylene, polypropylene, polyester, nylon, and aramid fibers, particularly polyester fibers. Suitable inorganic fibers for the reinforcing layer include, for example, glass, carbon, metal, and wollastonite fibers, particularly glass fibers.

Especially suitable metal films for use in the reinforcing layer include aluminum films. Composite films comprising one or more metal films and one or more polymeric films are also suitable.

According to a highly preferred embodiment, the reinforcement inlay comprises a fiber mat, especially a glass fiber mat, laminated between two non-woven, especially two polyester non-woven.

Especially preferred, the at least one reinforcement inlay is present in the lower layer. Further preferred, the upper layer does not comprise a reinforcement inlay.

Particularly, the reinforcement inlay and the lower and/or upper layer with respect to their lateral extension are essentially identical in size.

Furthermore, the root barrier membrane on an upper major surface of the upper layer further may comprise a surface finish layer, especially a particle-based layer and/or a plastic film-based layer. Likewise, the root barrier membrane on a lower major surface of the lower layer further may comprise a bottom finish layer, especially a particle-based layer and/or a plastic film-based layer.

The surface finish layer and the bottom finish layer may be identical in composition and/or structure or different.

The term "particle-based layer" refers to a layer comprising or consisting of solid particles.

Suitable solid particles for use in the particle-based layer include, for example, inorganic particles, preferably selected from sand, talcum, gravel, and/or slates. The particles may be adhesively bonded to the upper major surface of the upper layer.

A plastic film-based layer suitable for use as surface finish layer and/or bottom finish layer may be a polyolefin film and/or a thermoplastic film, especially a polyethylene and/or polypropylene film, in particular a high-density polyethylene film.

The bottom finish layer in particular is a burn-off film, i.e. a protective layer applied to the membrane to prevent it from sticking to itself during storage and handling. It is in particular designed to be burned off and/or melted away when the membrane is installed using a torch (torch-applied membranes).A preferred width and length of the root barrier membrane depend mainly on the intended application, particularly on the type of the substrate to be sealed. According to one or more embodiments, the membrane sheet has a width in the range of 0.2 - 5 m, preferably 0.5 - 3.5 m, more preferably 1 - 3 m.

For installation, the root barrier membrane may be provided in the form of a sheet with desired length and width and/or in the form of a roll comprising the membrane in a rolled-up configuration.

With a first highly preferred root barrier membrane, the following features are realized in combination:
- The first bitumen composition of the upper layer, based on the total weight of the first bitumen composition, comprises at least 65 wt.%, of bitumen;
- The second bitumen composition in the lower layer, based on the total weight of the second bitumen composition, comprises at least 75 wt.%, of bitumen;
- A proportion of amorphous polyolefin in the first bitumen composition is below 30 wt.%, especially below 25 wt.%;
- Based on the total weight of the second bitumen composition, a proportion of the styrene block copolymer, especially styrene-butadiene-styrene (SBS), in the second bitumen composition at most 8 wt.%.

With a second highly preferred root barrier membrane, the following features are realized in combination:
- The first bitumen composition of the upper layer, based on the total weight of the first bitumen composition, comprises 65 to 75 wt.% of bitumen;
- The second bitumen composition in the lower layer, based on the total weight of the second bitumen composition, 75 to 85 wt.% of bitumen;
- Based on the total weight of the first bitumen composition, a proportion of the amorphous polyolefin in the first bitumen composition, especially atactic polypropylene (APP), is 15 to 25 wt.%, in particular 17 to 23 wt.%;
- Based on the total weight of the second bitumen composition, a proportion of the styrene block copolymer, especially styrene-butadiene-styrene (SBS), in the second bitumen composition is 5 - 8 wt.%;
- Based on the total weight of the second bitumen composition, a proportion of the root inhibition agent in the second bitumen composition is from 0.1 to 0.6 wt.%.

With third highly preferred root barrier membrane, the following features are realized in combination:
- The first bitumen composition of the upper layer, based on the total weight of the first bitumen composition, comprises 65 to 75 wt.% of bitumen;
- The second bitumen composition in the lower layer, based on the total weight of the second bitumen composition, 75 to 85 wt.% of bitumen;
- Based on the total weight of the first bitumen composition, a proportion of the amorphous polyolefin in the first bitumen composition, especially atactic polypropylene (APP), is 15 to 25 wt.%, in particular 17 to 23 wt.%;
- based on the total weight of the second bitumen composition, a proportion of the styrene block copolymer, especially styrene-butadiene-styrene (SBS), in the second bitumen composition is 5 - 8 wt.%;
- Based on the total weight of the second bitumen composition, a proportion of the root inhibition agent in the second bitumen composition is at most 0.4 wt.%, especially 0.2 - 0.4 wt.%;
- the first bitumen composition, based on the total weight of the first bitumen composition, comprises 5 - 10 wt.-%, of the at least one inorganic filler and the second bitumen composition, based on the total weight of the second bitumen composition, comprises 8 - 15 wt.-%, of the at least one inorganic filler, whereby the at least one inorganic filler in particular is calcium carbonate.

Methods for producing bitumen based membranes are known to a person skilled in the art and they may be produced by any conventional means, such as by way of extrusion, co-extrusion, coating, calendaring, and/or hot-pressing.

A further aspect of the present invention is related to a construction, especially a building roof, a building facade, a base slab, an inner and/or outer area of a tunnel, a canopy, a bridge and/or a swimming pool, comprising a surface covered with a root barrier membrane as described above.

The construction surface in particular comprises or consists of mortar, concrete, metal, steel, sheet steel and/or timber.

In particular, the surface of the construction covered with the root barrier is a surface to be planted with greenery or it is already planted with greenery.

Another aspect of the present invention is directed to a method of sealing a construction surface with a root barrier membrane as described above, comprising the steps of:
i) Providing and placing a first part, especially a first sheet or a first roll, of the root barrier membrane with its lower layer facing the construction surface to be sealed on the construction surface;
ii) optionally, providing and placing at least one further part, especially a further sheet or roll, of the root barrier membrane according to any of preceding claims with its lower layer facing the construction surface to be sealed on the construction surface, especially such that neighboring sheets of the root barrier membrane overlap;
iii) optionally connecting the individual sheets, e.g. by a material connection, such as e.g. adhesively bonding and/or welding;
iv) optionally, arranging a vegetation layer on top of the placed root barrier membrane.

The construction surface which is sealed with the root barrier membrane can be a primed or a non-primed surface, preferably a non-primed surface. The expression "primed surface" is understood to mean that the surface layer of the substrate is a primer layer, i.e., composed of a primer composition. Primers are commonly used to enhance adhesion of adhesives, coatings, and sealants to substrates. In case of a primed surface, the above method in particular comprises a further step of priming the construction surface before step i).

As still further aspect of the present invention is directed to the use of a root barrier membrane as described above for sealing a construction surface, in particular a surface of a construction to be planted with greenery.

The construction surface in particular is part of a building roof, a building facade, a base slab, an inner and/or outer area of a tunnel, a canopy, such as e.g. road and/or railway canopies, a bridge and/or a swimming pool.

Especially, the construction surfaces comprises or consists of mortar, concrete, metal, steel, sheet steel and/or timber. It can be a primed or a non-primed surface, preferably a non-primed surface, as described above.

Further advantageous embodiments and combinations of features of the invention result from the following exemplary embodiments and the set of patent claims as a whole.

### Brief description of the drawings

The drawings used to illustrate the exemplary embodiments show:
- Fig. 1: a cross-section of a first root barrier membrane comprising an upper layer and a lower layer;
- Fig. 2: a cross-section of a second root barrier membrane comprising an upper layer and a lower layer, wherein the lower layer comprises an embedded reinforcement inlay;
- Fig. 3: a cross-section of a third root barrier membrane that with respect to the lower layer and the upper layer is similar in design with the membrane of Fig. 2 additionally comprising a particle-based layer on an upper major surface of the upper layer;
- Fig. 4: a cross-section of a flat roof with the root barrier membrane of Fig. 2 on an outer surface of the roof and a vegetation layer on top.

In general, identical parts are marked with the same reference symbols in the figures.

### Ways to carry out the invention

### Examples of root barrier membrane

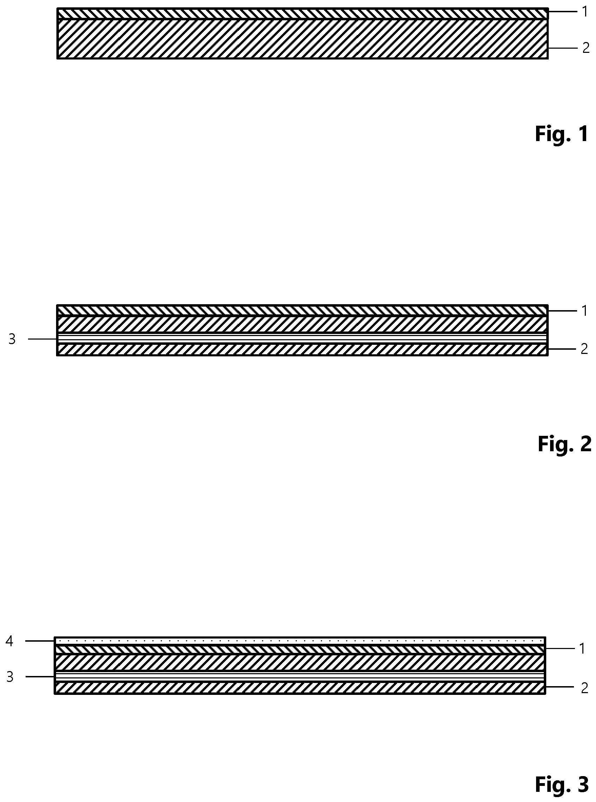

Fig. 1 shows a cross-section of a first root barrier membrane comprising an upper layer 1 and a lower layer 2. The overall thickness of the membrane for example is 5 mm. Thereby, the thickness of the lower layer 2 is ≤ 1 mm.

The upper layer 1 consists of a first bitumen composition with 81 wt.% bitumen, 7.7 wt.% SBS, 11 wt.% calcium carbonate (inorganic filler) and 0.25 wt.% of Preventol^{®} B5 (root inhibition agent). All components are essentially homogeneously distributed.

The lower layer 2 consists of a second bitumen composition with 71 wt% bitumen, 21 wt.% atactic polypropylene (APP; amorphous polyolefin) and 8 wt.% calcium carbonate.

The lower layer and the upper layer are materially bonded together by self-adhesion on opposing surfaces over the entire opposing surfaces.

The membrane according to Fig. 1 was produced by standard processes and equipment (mixing of bitumen compositions at high temperatures; application of bitumen compositions with a coating system, e.g. with calendaring rollers for thickness control; cooling) as known to the skilled person.

Fig. 2 shows a cross-section of a second root barrier membrane. The upper layer 1 and the lower layer 2, apart from the additional reinforcement inlay 3, are identical in composition with the respective layers of Fig. 1. The lower layer of Fig. 2 furthermore comprises an embedded reinforcement inlay 3 in the form of a glass fiber mat laminated between two polyester non-woven.

For production of the membrane of Fig. 2, the reinforcement inlay 3 can be provided as a staring material which then is coated with the second bitumen composition from two sides and subsequently, the first bitumen composition can be applied on top.

Fig. 3 shows a cross-section of a third root barrier membrane. The upper layer 1 and the lower layer 2 are identical in structure and composition with the respective layers of Fig. 2. However, a sand particle-based layer 4 is arranged on the upper major surface of the upper layer 1 as a surface finish layer.

For production of the membrane of Fig. 3, sand particles can be applied to the still hot upper layer 1 whereby the particles are materially bonded to the upper surface of the upper layer 1.

### Installation on a flat roof

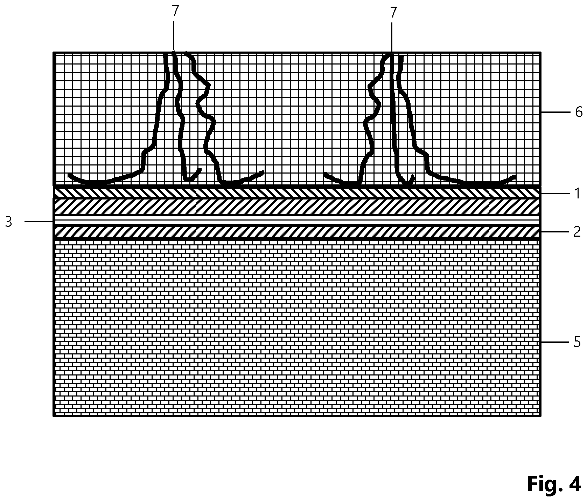

Fig. 4 shows a cross-section of a flat roof 5 with the root barrier membrane of Fig. 2 on an outer surface of the roof and a vegetation layer 6 on top. The special structure of the root barrier membrane prevents the roots 7 in the vegetation layer 6 from penetrating the root barrier membrane.

Test have shown that the root barrier membranes can be installed on flat roofs and other construction surfaces by standard techniques such as e.g. torching.

### Penetration resistance tests

A two year-long test was carried out in accordance with the "Procedure for investigating the root penetration resistance of membranes and coatings for green roofs" (Forschungsgesellschaft Landschaftsentwicklung Landschaftsbau e.V. (FLL); Friedensplatz 4, D-53111 Bonn, Green Roof Guidelines 2018, Appendix C, 2018). For the test, 8 containers equipped with root barrier membranes such as shown in Fig. 2 were used. Another 3 containers without sheet were serving as control that allowed to compare the plant development in the different containers. According to the guideline five sheets of the membrane were installed in the containers at the test site. Four seams at the corners where the walls meet, two seams along the base at the corners and two T-seams were created. The containers were installed in a climate-controlled glass house. The test plant Pyracantha coccinea 'Orange Charmer' is a Firethorn variety with satisfying growth at the defined climatic conditions also during winter half year. The other test plant, Agropyron repens (Couch Grass), is forming rhizomes which can damage protection sheets as well as roots. Check samples of the root barrier membranes were taken before and after the test and stored.

Firethorn developed well during the whole test period. The required growth of the plants in the test containers (80 % of the average vigorousness of growth in the control containers) was at all four evaluations with 97-112 % clearly exceeded. Even Couch Grass performed well during the two years test period with a middle up to high density of stand. In the eight test containers, at the first evaluation on average 35 % of the surface was covered with Couch Gras and at the evaluations later on 41-76 % (nominal value ≥ 40 %) were covered.

No root perforation of the membrane or penetration into a seam of any significant length was detected in any of the eight test containers. Therefore, it can be concluded that the root barrier membrane according to the invention are resistant to roots according to FLL standard and according to EN 13948:2008-01.

### Leaching tests

Dynamic surface leaching tests according to DIN CEN/TS 16637-2:2014-11 have been performed with membranes such as shown in Fig. 2. Thereby, both, with respect to herbicides as well as organic and inorganic parameters, no substances could be detected above the detection limit.

This show that the membranes according to the invention do not release significant amounts of environmentally harmful substances.

The above examples are for illustrative purposes only and can be modified as desired within the scope of the invention. For example, with the membranes of Figs. 1 and 2, a surface finish layer and/or bottom finish layer, e.g. a plastic film such as for example a high density polyethylene film, can be applied to the upper layer and/or the lower layer. Likewise, with the membrane of Fig. 3, an additional bottom finish layer, e.g. a plastic film such as a burn-off film, may be applied; and/or the sand particle-based layer 4 may be omitted or replaced by a plastic film. In summary, it can be concluded that with the present invention highly beneficial root barrier membranes are provided that are suitable for sealing surfaces of a construction to be planted with greenery. Furthermore, the membranes are advantageous with respect to leaching of environmentally harmful substances and at the same time they are easy to manufacture and install.

## Claims

1. A root barrier membrane comprising:
a) an upper layer (1) based on a first bitumen composition comprising, based on the total weight of the first bitumen composition:
- at least 35 wt.%, especially at least 50 wt.%, of bitumen and
- at least 5 wt.% of an amorphous polyolefin (APO);
b) a lower layer (2), based on a second bitumen composition comprising, based on the total weight of the second bitumen composition:
- at least 35 wt.%, especially at least 50 wt.%, of bitumen,
- at least 1 wt.% of at least one styrene block copolymer,
- a root inhibition agent;
whereby the first composition of the upper layer (1) is different from the second composition of the lower layer (2).

2. The root barrier membrane according to claim 1, whereby the upper layer (1) and the lower layer (2) are at least in parts materially bonded together on opposing surfaces, especially the upper layer and the lower layer bonded together over the entire opposing surfaces.

3. The root barrier membrane according to any of preceding claims, whereby a thickness of the lower layer (2) is larger than 50%, especially 55 to 98 %, in particular 65 to 90%, of the total thickness of the root barrier membrane.

4. The root barrier membrane according to any of preceding claims, whereby a thickness of the upper layer (1) is smaller than 2 mm, especially smaller than 1.5 mm, in particular smaller than 1.0 mm and/or a thickness of the lower layer (2) is larger than 2 mm, especially larger than 3 mm, in particular larger than 4 mm.

5. The root barrier membrane according to any of preceding claims, whereby the first bitumen composition of the upper layer (1), based on the total weight of the first bitumen composition, comprises 55 to 95 wt.%, especially 60 to 85 wt.%, in particular 65 to 75 wt.%, of bitumen and whereby the second bitumen composition in the lower layer (2), based on the total weight of the second bitumen composition, comprises 55 to 95 wt.%, especially 65 to 90 wt.%, in particular 75 to 85 wt.%, of bitumen.

6. The root barrier membrane according to any of preceding claims, whereby the upper layer (1) features a penetration value (PEN) in the range of 30 - 300 dmm, more preferably 50 - 220 dmm, even more preferably 80 - 120 dmm.

7. The root barrier membrane according to any of preceding claims, whereby, based on the total weight of the first bitumen composition, a proportion of the amorphous polyolefin in first bitumen composition is from 8 to 40 wt.%, especially 10 to 30 wt.%, in particular 15 to 25 wt.% and whereby, based on the total weight of the second bitumen composition, a proportion of the styrene block copolymer in the second bitumen composition is from 2 to 20 wt.%, especially 3 to 15 wt.%, in particular 4 to 12 wt.%.

8. The root barrier membrane according to any of preceding claims, whereby the amorphous polyolefin comprises atactic polypropylene (APP) and/or atactic poly(ethylene-co-propylene) (aE/P); and the styrene block copolymer in the lower layer is selected from styrene-butadiene-styrene (SBS).

9. The root barrier membrane according to any of preceding claims, whereby, based on the total weight of the second bitumen composition, a proportion of the root inhibition agent in the second bitumen composition is from 0.01 to 1 wt.%, especially 0.1 to 0.6 wt.%, in particular 0.2 to 0.4 wt.% and the root inhibition agent is an organic root inhibition agent, especially selected from selected from mecoprop or esters and/or salts thereof.

10. The root barrier membrane according to any of preceding claims, whereby the first bitumen composition, based on the total weight of the first bitumen composition, further comprises >0 - 30 wt.%, preferably 3 - 25 wt.-%, more preferably 5 - 10 wt.-%, of at least one inorganic filler and/or the second bitumen composition, based on the total weight of the second bitumen composition, further comprises >0 - 30 wt.%, preferably 5 - 25 wt.-%, more preferably 8 - 15 wt.-%, of at least one inorganic filler and whereby the inorganic filler is selected from sand, granite, calcium carbonate, clay, expanded clay, diatomaceous earth, pumice, mica, kaolin, talc, dolomite, xonotlite, perlite, vermiculite, Wollastonite, barite, magnesium carbonate, calcium hydroxide, calcium aluminates, silica, fumed silica, fused silica, aerogels, glass beads, hollow glass spheres, ceramic spheres, bauxite, comminuted concrete, zeolites, or mixtures thereof, whereby the at least one inorganic filler in particular is calcium carbonate.

11. The root barrier membrane according to any of preceding claims, whereby the upper (1) and/or the lower layer (2), especially the lower layer (1), in addition to the first and/or the second bitumen composition comprises a reinforcement inlay (3), especially a non-woven, woven, laid scrim, fiber mat and/or a metal film.

12. The root barrier membrane according to any of preceding claims, whereby the reinforcement inlay (3) comprises a fiber mat, especially a glass fiber mat, laminated between two non-woven, especially polyester non-woven.

13. The root barrier membrane according to any of preceding claims, whereby:
- The first bitumen composition of the upper layer, based on the total weight of the first bitumen composition, comprises 65 to 75 wt.% of bitumen;
- The second bitumen composition in the lower layer, based on the total weight of the second bitumen composition, 75 to 85 wt.% of bitumen;
- Based on the total weight of the first bitumen composition, a proportion of the amorphous polyolefin in the first bitumen composition, especially atactic polypropylene (APP), is 15 to 25 wt.%, in particular 17 to 23 wt.%;
- Based on the total weight of the second bitumen composition, a proportion of the styrene block copolymer, especially styrene-butadiene-styrene (SBS), in the second bitumen composition is 5 - 8 wt.%;
- Based on the total weight of the second bitumen composition, a proportion of the root inhibition agent in the second bitumen composition is from 0.1 to 0.6 wt.%, especially 0.2 to 0.4 wt.%;
- Optionally, the first bitumen composition, based on the total weight of the first bitumen composition, comprises 5 - 10 wt.-%, of at least one inorganic filler and optionally the second bitumen composition, based on the total weight of the second bitumen composition, comprises 8 - 15 wt.-%, of the at least one inorganic filler, whereby the at least one inorganic filler in particular is calcium carbonate.

14. A construction (5), especially a building roof, a building facade, a base slab, an inner and/or outer area of a tunnel, a canopy, a bridge and/or a swimming pool, comprising a surface covered with a root barrier membrane according to any of preceding claims.

15. Method of sealing a construction surface with a root barrier membrane according to any of claims 1 - 13 comprising the steps of:
i) Providing and placing a first sheet of the root barrier membrane with its lower layer facing the construction surface to be sealed on the construction surface;
ii) optionally, providing and placing at least one a further sheet of the root barrier membrane according to any of preceding claims with its lower layer facing the construction surface to be sealed on the construction surface, especially such that neighboring sheets of the root barrier membrane overlap;
iii) optionally connecting the individual sheets, e.g. by a material connection, such as e.g. adhesively bonding and/or welding;
iv) optionally, arranging a vegetation layer on top of the placed root barrier membrane.

16. Use of a root barrier membrane according to any of claims 1 - 13 for sealing a construction surface, in particular a surface of a construction to be planted with greenery.
